# EUROPÄISCHE PATENTANMELDUNG

(11) **EP 2 452 800 A1**
(43) Veröffentlichungstag der Anmeldung: **16.05.2012**
(21) Anmeldenummer: 10015624.9
(22) Anmeldetag: 14.12.2010
(51) Int. Cl.: B29C 45/73, B29C 33/00, B29C 35/00

(54) **Verfahren zum Temperieren eines Formwerkzeugs**

(30) Priorität: 11.11.2010 DE 102010051047
(71) Anmelder: Linde AG, 80331 München (DE); ISK GmbH, 58638 Iserlohn (DE)
(72) Erfinder: Praller, Andreas, 82110 Germering (DE); Orsén, Mikael, 23136 Trelleborg (SE); Kürten, Andreas, 58644 Iserlohn (DE); Hauner, Matthias, 38165 Lehre (DE)
(74) Vertreter: Gellner, Bernd

(57) **Zusammenfassung**

Die Erfindung betrifft einen Adapter zum Verbinden einer ersten Zuleitung (1) und einer zweiten Zuleitung (2) mit einem Temperierkanal (3) eines Formwerkzeugs (4). Ein erster Anschluss (6) ist mit einem ersten Auslass (16) über eine äußere Verbindungsleitung (10, 13) verbunden und ein zweiter Anschluss (7) mit einem zweiten Auslass (17) über eine innere Verbindungsleitung (2), wobei die innere Verbindungsleitung (2) zumindest teilweise innerhalb der äußeren Verbindungsleitung (13) verläuft.

## Beschreibung

Die Erfindung betrifft einen Adapter zum Verbinden einer ersten Zuleitung und einer zweiten Zuleitung mit einem Temperierkanal eines Formwerkzeugs sowie die Verwendung eines solchen Adapters und ein Formwerkzeug mit einem solchen Adapter.

Beim Spritzgießen ist eine gleichmäßige Temperaturverteilung auf der Oberfläche des Formwerkzeugs ein entscheidender Faktor für gute Qualität und kurze Kühlzeiten. In der Regel wird die Temperatur eines Formwerkzeugs für die thermoplastische Verarbeitung mit Hilfe von Wasser oder Öl geregelt, die durch entsprechende Temperierkanäle in dem Formwerkzeug geleitet werden.

Die Temperaturverteilung im Formwerkzeug hängt von der Lage und Beabstandung der einzelnen Temperierkanäle untereinander und deren Abstand zur Oberfläche des Formwerkzeugs ab. Zur Temperierung langer und dünner Bereiche des Formwerkzeugs müssen Temperierkanäle mit entsprechend geringen Durchmessern verwendet werden. Der Durchsatz an Wasser oder Öl als Temperiermedium wird aber durch die geringen Kanaldurchmesser deutlich begrenzt, so dass auch die Kühl- bzw. Temperierwirkung reduziert wird. Dies hat erhebliche Kühl- bzw. Zykluszeitverlängerungen und/oder Qualitätseinbußen an den hergestellten Erzeugnissen zur Folge.

Aus der DE 199 18 428 C1 ist bereits ein Verfahren zum Kühlen von Formwerkzeugen mittels Kohlendioxid bekannt. Hierbei wird über ein Zuleitungssystem unter Druck befindliches Kohlendioxid in dafür vorgesehene Werkzeugbereiche geleitet, um diese Bereiche durch eine gezielte Expansion des Kohlendioxids zu kühlen. Für die Abführung des Gases werden Temperierkanäle mit nur geringem Querschnitt benötigt. Dadurch können auch Bereiche im Formwerkzeug gekühlt werden, in denen eine Wasser- oder Ölkühlung technisch und wirtschaftlich vorher nicht sinnvoll möglich war.

Bei der sogenannten variothermen Temperierung von Formwerkzeugen wird das Formwerkzeug abwechselnd abgekühlt und erwärmt. Beim Kunststoffspritzgießen wird beispielsweise erst ein heißes Temperiermedium durch die Temperierkanäle des Formwerkzeugs geleitet oder gepumpt, um das Formwerkzeug, insbesondere die Oberfläche der Kavität des Formwerkzeugs, auf die gewünschte Temperatur zu bringen. Dann wird der Einspritzvorgang gestartet und Kunststoffschmelze in die Kavität eingespritzt. Nach einer vorgegebenen Zeitspanne erfolgt die Kühlung des Formwerkzeugs. Hierzu wird ein kaltes Temperiermedium durch die Temperierkanäle geleitet.

Wie oben beschrieben, wird Kohlendioxid bereits als Temperiermedium eingesetzt. Zum Kühlen wird das Kohlendioxid bevorzugt in flüssiger Form in das Formwerkzeug geleitet und in einen Temperierkanal hinein oder innerhalb eines Temperierkanals entspannt. Zum Erwärmen des Formwerkzeugs oder eines Teils des Formwerkzeugs wird vorzugsweise gasförmiges Kohlendioxid eingesetzt, welches vor dem Einleiten in den Temperierkanal erhitzt wurde.

Um eine ausreichende Entspannung des flüssigen Kohlendioxids zu erzielen, muss das Kohlendioxid über eine Zuleitung mit geringerem Querschnitt als der Temperierkanal zugeführt werden. Andererseits ist es zur Erzielung einer schnellen Erwärmung des Formwerkzeugs günstig bzw. notwendig, das heiße Temperiermedium, z. B. erhitztes Kohlendioxidgas, über eine Zuleitung mit möglichst großem Querschnitt zuzuführen.

Zur Durchführung einer variothermen Temperierung sind daher in der Regel separate Zuführungen für das kalte Temperiermedium und das warme Temperiermedium erforderlich.

Aufgabe vorliegender Erfindung ist es daher, eine Vorrichtung zur Verfügung zu stellen, die es ermöglicht, wahlweise ein Kühl- oder ein Heizmedium, insbesondere flüssiges oder gasförmiges Kohlendioxid, in einen Temperierkanal eines Formwerkzeugs zu leiten.

Diese Aufgabe wird durch einen Adapter zum Verbinden einer ersten Zuleitung und einer zweiten Zuleitung mit einem Temperierkanal eines Formwerkzeugs gelöst, welcher dadurch gekennzeichnet ist, dass ein erster Anschluss für die erste Zuleitung, ein zweiter Anschluss für die zweite Zuleitung und ein Temperierkanalanschluss für den Temperierkanal vorgesehen sind, wobei der erste Anschluss mit einem ersten Auslass über eine äußere Verbindungsleitung verbunden ist und der zweite Anschluss mit einem zweiten Auslass über eine innere Verbindungsleitung verbunden ist und wobei die innere Verbindungsleitung zumindest teilweise innerhalb der äußeren Verbindungsleitung verläuft.

Der Begriff "Formwerkzeug" wird im Rahmen dieser Anmeldung für ein Spritzgusswerkzeug verwendet, welches eine zur Herstellung eines Kunststoff- oder Metallteils geeignete Kavität aufweist. Das Werkzeug dient beispielsweise zur Herstellung großer Stückzahlen von Kunststoffteilen. Flüssiger Kunststoff wird hierzu in das Werkzeug mit hohem Druck eingespritzt, das Kunststoffteil kühlt ab und wird nach einer gewissen Zeit aus dem Werkzeug ausgestoßen. In der Regel besteht das Formwerkzeug aus zwei oder mehr Werkzeugteilen, die voneinander getrennt oder relativ zueinander bewegt werden können, um das Werkzeug zu öffnen und zu schließen.

Unter dem Begriff "Temperieren" wird eine Herabsetzung, Erhöhung oder auch ein Halten der Temperatur des Formwerkzeugs oder eines Teils des Formwerkzeugs verstanden.

Der Begriff "Temperiermedium" soll gasförmige, flüssige und feste Medien sowie Gemische aus solchen umfassen, welche zum Temperieren eines Formwerkzeugs eingesetzt werden. Insbesondere werden gasförmige oder flüssige Stoffe oder Gemische aus gasförmigen und festen Stoffen als Temperiermedium verwendet.

Der Begriff "Temperierkanal" bezeichnet einen durch zumindest einen Teil des Formwerkzeugs verlaufenden Strömungsweg, durch den ein Temperiermedium geleitet werden kann.

Der Temperierkanalanschluss des erfindungsgemäßen Adapters weist einen ersten Auslass und einen zweiten Auslass auf, wobei an den ersten Auslass eine äußere Verbindungsleitung und an den zweiten Auslass eine innere Verbindungsleitung angeschlossen sind. Die äußere und die innere Verbindungsleitung sind wiederum mit einer ersten und einer zweiten Zuleitung verbunden, über die unterschiedliche Temperiermedien zugeführt werden können.

Die innere Verbindungsleitung verläuft zumindest teilweise innerhalb der äußeren Verbindungsleitung, so dass der Platzbedarf für die beiden Verbindungsleitungen minimiert wird. Zumindest auf einem Teilstück bildet die äußere Verbindungsleitung ein Mantelrohr, welches die innere Verbindungsleitung umgibt. In diesem Teilstück strömt das über die äußere Verbindungsleitung zugeführte Medium in dem durch die Wandung der inneren Verbindungsleitung und die Wandung der äußeren Verbindungsleitung gebildeten Ringkanal.

Die erste Zuleitung ist mit der äußeren Verbindungsleitung strömungsseitig verbunden, insbesondere direkt oder über ein Zwischenstück an diese angeschlossen. Erfindungsgemäß kann es sich bei der ersten Zuleitung und der äußeren Verbindungsleitung auch um eine einzige durchgehende Leitung handeln.

Die zweite Zuleitung ist mit der inneren Verbindungsleitung strömungsseitig verbunden, insbesondere direkt oder über ein Zwischenstück an diese angeschlossen.

Vorzugsweise sind die zweite Zuleitung und die innere Verbindungsleitung einstückig ausgebildet, das heißt, es handelt sich bei der zweiten Zuleitung und der inneren Verbindungsleitung um eine einzige durchgehende Leitung.

Bevorzugt ist die innere Verbindungsleitung im Bereich des Temperierkanalanschlusses innerhalb der äußeren Verbindungsleitung angeordnet. Für den Anschluss des Adapters an den Temperierkanal wird damit nicht mehr Platz benötigt als für den Anschluss nur einer Zuleitung. Dadurch wird es möglich, auch zwei oder mehr Temperierkanäle, deren Einlässe nahe beieinander liegen, gleichzeitig mit Kühl- oder Heizmedium zu versorgen.

Es hat sich als günstig erwiesen, den Adapter T-förmig auszuführen. Der erste und der zweite Anschluss sind in diesem Fall rechtwinklig zueinander ausgerichtet, so dass auch die mit den beiden Anschlüssen verbundenen Zuleitungen rechtwinklig zueinander verlaufen.

Von Vorteil verläuft eine der Verbindungsleitungen von ihrem Anschluss zu ihrem Auslass, d.h. vom ersten Anschluss zum ersten Auslass bzw. vom zweiten Anschluss zum zweiten Auslass, geradlinig. Insbesondere ist die innere Verbindungsleitung als gerade Leitung ausgeführt.

Vorzugsweise beträgt der Innendurchmesser der inneren Verbindungsleitung höchstens 2 mm, bevorzugt höchstens 1 mm, besonders bevorzugt höchstens 0,5 mm.

Der Innendurchmesser der äußeren Verbindungsleitung beträgt höchstens 10 mm, bevorzugt höchstens 6 mm, besonders bevorzugt höchstens 2 mm.

In einer bevorzugten Ausführungsform verlaufen die innere und die äußere Verbindungsleitung zumindest teilweise koaxial zueinander. Die innere Verbindungsleitung wird in diesem Bereich konzentrisch von der äußeren Verbindungsleitung umgeben. Innere und äußere Verbindungsleitung bilden ein Doppelrohr mit einem zentralen Strömungsweg und einem weiteren den zentralen Strömungsweg ringförmig umgebenden Strömungsweg.

Vorzugsweise ist der erste Anschluss mit einer Quelle für ein Heizmedium und der zweite Anschluss mit einer Quelle für ein Kühlmedium verbunden. Das Heizmedium wird über die erste Zuleitung zu dem Adapter geleitet, strömt durch die äußere Verbindungsleitung zu dem ersten Auslass und wird in den Temperierkanal abgegeben. Entsprechend wird zum Kühlen über die zweite Zuleitung ein Kühlmedium zu dem Adapter und weiter durch die innere Verbindungsleitung zu dem zweiten Auslass geleitet und anschließend in den Temperierkanal abgegeben.

In einer weiteren bevorzugten Ausführungsform befinden sich der erste und der zweite Auslass in einer Ebene.

Von Vorteil ist der Temperierkanalanschluss mit dem Formteil verschraubbar. Der Temperierkanalanschluss wird mit dem Formwerkzeug von Vorteil so verbunden, dass sich ein durchgehender und vorzugsweise gegen die Umgebung geschlossener Strömungsweg von der ersten Zuleitung in den Temperierkanal und von der zweiten Zuleitung in den Temperierkanal ergibt.

Vorzugsweise wird das Formwerkzeug mit einem technischen Gas, bevorzugt mit einem inerten Gas, besonders bevorzugt mit Kohlendioxid, beheizt und/oder gekühlt. Die Kühlung findet ganz besonders bevorzugt mit flüssigem Kohlendioxid statt. Weitere technische Gase, die erfindungsgemäß mit Vorteil eingesetzt werden können, sind Argon, Stickstoff oder Helium. Diese Gase haben den Vorteil, umweltverträglich, ungiftig und unbrennbar zu sein.

Grundsätzlich können aber auch andere Wärme- bzw. Kälteträger zur erfindungsgemäßen Werkzeugtemperierung genutzt werden. Hierzu gehören beispielsweise Ammoniak, N20, FCKW, teilhalogenierte oder teilfluorierte Kohlenwasserstoffe, wie R134a, Chlorkohlenwasserstoffe oder halogenfreie Kohlenwasserstoffe. Im Rahmen der vorliegenden Erfindung haben sich jedoch technische Gase und hierunter vor allem Kohlendioxid als geeignetes Kühl- bzw. Heizmedien erwiesen. Insbesondere mit flüssigem Kohlendioxid werden sehr hohe Abkühlgeschwindigkeiten erzielt.

Die Erfindung sowie weitere Einzelheiten der Erfindung werden im Folgenden anhand von in den Zeichnungen dargestellten Ausführungsbeispielen näher erläutert. Hierbei zeigen:
- Fig. 1: einen erfindungsgemäßen Adapter und
- Fig. 2: das Detail A aus Figur 1 in vergrößerter Darstellung.

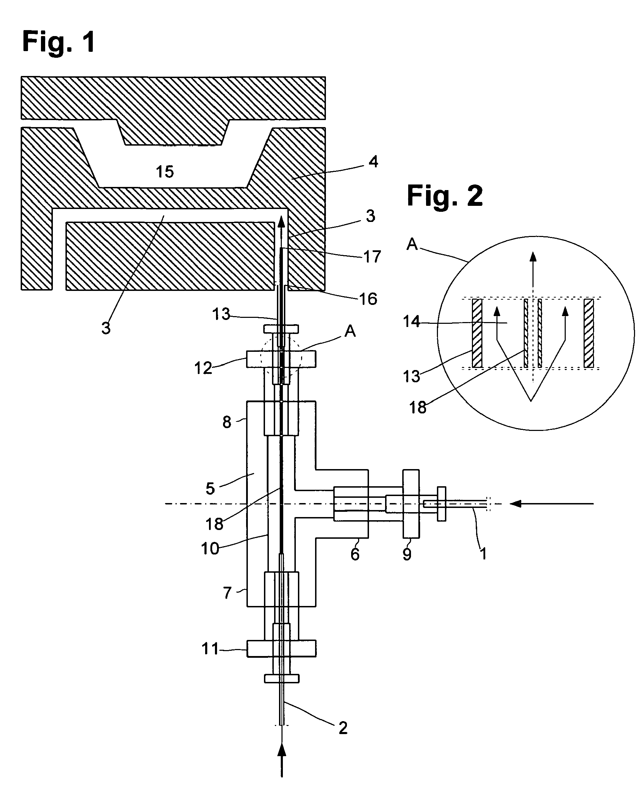

In Figur 1 ist ein Adapter zum Anschließen einer ersten Zuleitung 1 für ein Heizmedium und einer zweiten Zuleitung 2 für ein Kühlmedium an einen Temperierkanal 3 eines Formwerkzeugs 4 gezeigt. Über die erste Zuleitung 1 kann gasförmiges Kohlendioxid als Heizmedium in den Temperierkanal 3 geleitet werden. Die zweite Zuleitung 2 dient insbesondere zur Zuführung von flüssigem Kohlendioxid, welches in dem oder in den Temperierkanal 3 entspannt werden soll, um das Formwerkzeug 4 zu kühlen.

Der erfindungsgemäße Adapter weist ein T-Stück 5 mit einem ersten Anschluss 6, einem zweiten Anschluss 7 und mit einem Temperierkanalanschluss 8 auf. Der zweite Anschluss 7 und der Temperierkanalanschluss 8 sind in einer Linie genau entgegengesetzt zueinander angeordnet. Der erste Anschluss 6 ist senkrecht zu der Verbindungslinie der Anschlüsse 7, 8 angeordnet. Das T-Stück 5 ist zum Beispiel als 6 mm starkes Rohr ausgeführt, so dass die Anschlüsse 6, 7, 8 durch eine im Inneren des T-Stücks 5 verlaufende Bohrung 10 miteinander verbunden sind.

An den ersten Anschluss 6 wird die erste Zuleitung 1 für gasförmiges Kohlendioxid angeschlossen. Die erste Zuleitung 1 ist beispielsweise als Rohr mit einem Außendurchmesser von 3,18 mm und einem Innendurchmesser von 1,40 mm ausgeführt. Das Kapillarrohr 1 wird über eine Klemmverschraubung 9 in dem ersten Anschluss 6 des T-Stücks 5 fixiert. Das Kapillarrohr 1 endet innerhalb der Klemmverschraubung 10 oder in dem T-Stück 5.

An den zweiten Anschluss 7 wird die zweite Zuleitung 2 für flüssiges Kohlendioxid angeschlossen. Als zweite Zuleitung 2 wird beispielsweise ein Kapillarrohr mit einem Außendurchmesser von 1,6 mm und einem Innendurchmesser von 0,5 mm eingesetzt. In der in Figur 1 gezeigten Ausführung verringert sich der Außendurchmesser des Kapillarrohres 2 von 1,6 mm auf 0,9 mm. Die zweite Zuleitung 2, das heißt das Kapillarrohr 2, wird mittels einer Klemmverschraubung 11 mit dem T-Stück 5 verbunden.

Die zweite Zuleitung 2 ist an eine innere Verbindungsleitung 18 angeschlossen oder direkt mit einer inneren Verbindungsleitung verbunden. Es kann sich bei der zweiten Zuleitung 2 und der inneren Verbindungsleitung 18 auch um eine einzige durchgehende Leitung handeln. Die innere Verbindungsleitung 18 erstreckt sich durch das T-Stück 5, verlässt dieses über den Temperierkanalanschluss 8 und endet in einem zweiten Auslass 17.

In den Temperierkanalanschluss 8 wird ein die innere Verbindungsleitung 18 konzentrisch als Mantelrohr umgebendes Heizgasrohr 13 eingebracht. Das Heizgasrohr 13 ist beispielsweise als Rohr mit einem Außendurchmesser von 3,18 mm und einem Innendurchmesser von 1,40 mm ausgeführt. Das Heizgasrohr 13 wird ebenfalls mittels einer Klemmverschraubung 12 an dem T-Stück 5 fixiert.

Der Auslass 16 des Heizgasrohres 13 steht über die Bohrung 10 im Inneren des T-Stücks 5 in Strömungsverbindung mit dem ersten Anschluss 6 und damit mit der ersten Zuleitung 1. Die Bohrung 10 und das Heizgasrohr 13 bilden somit die äußere Verbindungsleitung.

Das Formwerkzeug 4 dient zur Herstellung von Kunststoffteilen. Flüssiger Kunststoff wird hierzu in die Kavität 15 des Formwerkzeugs 4 mit hohem Druck eingespritzt. Der Kunststoff kühlt in der Kavität 15 ab und wird nach einer gewissen Zeit aus dem Formwerkzeug 4 ausgestoßen. Vorzugsweise wird das Formwerkzeug 4 vor Einbringen des Kunststoffs beheizt, um kurzzeitig ein höheres Temperaturniveau einzustellen und so die Fließfähigkeit der Kunststoffmasse zu erhöhen.

Zum Heizen des Formwerkzeugs 4 wird ein Heizmedium, vorzugsweise gasförmiges Kohlendioxid, über die erste Zuleitung 1 zugeführt. Das Heizmedium strömt von der Zuleitung 1 in die Bohrung 10 im Inneren des T-Stücks 5 und verlässt anschließend über den durch das Kapillarrohr 2 und das Heizgasrohr 13 gebildeten Ringspalt 14 das T-Stück 5. Das Heizgasrohr 13 wird so angeordnet, dass es teilweise in den Temperierkanal 3 des Formwerkzeugs 4 hineinragt. Das aus dem Heizgasrohr 13 austretende Heizmedium strömt in den Temperierkanal 3 und tritt in Wärmeaustausch mit den umgebenden Wänden des Formwerkzeugs 4, wobei dieses aufgeheizt wird.

Zum Heizen des Formwerkzeugs wird von Vorteil das gasförmige Kohlendioxid vor dem direkten Kontakt mit dem Formwerkzeug erwärmt. Als Heizvorrichtung zum Anwärmen des gasförmigen Kohlendioxids eignen sich insbesondere elektrisch oder mit Gas oder Dampf betriebene Erwärmer/Erhitzer.

Das Heizmedium, vorzugsweise gasförmiges Kohlendioxid, besitzt bevorzugt eine Temperatur zwischen 50 °C und 500 °C. Der Druck des Heizmediums wird vorteilhaft zwischen 10 bar und 400 bar gewählt. Unter diesen Bedingungen ist ein schnelles Aufwärmen des Formwerkzeugs möglich.

Nachdem das Formwerkzeug 4 durch das Heizmedium angewärmt wurde, wird eine Kunststoffmasse in die Kavität 15 des Formwerkzeugs 4 injiziert.

Anschließend wird das Formwerkzeug 4 gekühlt, um die Kunststoffmasse schnell auszuhärten. Hierzu wird der Heizgasstrom durch die erste Zuleitung 1 unterbrochen und ein Kühlmedium über die zweite Zuleitung 2 zugeführt. Als Kühlmedium wird bevorzugt flüssiges Kohlendioxid eingesetzt.

Das Kühlmedium durchströmt das T-Stück 5 innerhalb der zweiten Zuleitung 2. Die zweite Zuleitung 2 endet stromabwärts des Heizgasrohres 13, das heißt im Betrieb ragt die zweite Zuleitung 2 weiter in den Temperierkanal 3 hinein als das Heizgasrohr 13. Die zweite Zuleitung 2 ist als enges Kapillarrohr ausgeführt und besitzt einen Durchmesser, der geringer ist als der Durchmesser des Temperierkanals in diesem Abschnitt. Beim Austritt des flüssigen Kohlendioxids aus dem Kapillarrohr, d.h. beim Übergang in den Temperierkanal weitet sich somit der Leitungsquerschnitt für das flüssige Kohlendioxid auf und das flüssige Kohlendioxid erfährt eine Druckverringerung. Bei dieser Entspannung geht das flüssige Kohlendioxid in ein Gemisch aus Kohlendioxidgas und festen Kohlendioxidschneepartikeln über. Dieses Gemisch wird durch den Temperierkanal geleitet und kühlt dabei die an den Temperierkanal angrenzenden Bereiche des Formwerkzeugs und die in der Kavität 15 befindliche Kunststoffmasse wirkungsvoll ab.

Vorzugsweise wird das Formwerkzeug 4 während der Kühlphase und während der Heizphase mit dem gleichen Temperiermedium mit unterschiedlichen Temperaturen gekühlt bzw. beheizt. Auf diese Weise wird ein schnelles Umschalten von Kühlung auf Heizung des Formwerkzeugs 4 möglich. Besonders bevorzugtes Heiz- und Kühlmedium ist Kohlendioxid. So wird beispielsweise das Formwerkzeug 4 zur Kunststoffverarbeitung kurz vor und/oder während des Einbringens von Kunststoffschmelze durch heißes gasförmiges Kohlendioxid beheizt. Sobald die Kavität 15 gefüllt ist, wird auf Kühlung umgeschaltet. Dazu muss lediglich kaltes, vorzugsweise flüssiges Kohlendioxid denselben Temperierkanälen zugeführt werden. In den Temperierkanälen noch befindliches warmes Kohlendioxidgas wird dabei durch das zugeführte kalte Kohlendioxid verdrängt.

## Patentansprüche

1. Adapter zum Verbinden einer ersten Zuleitung (1) und einer zweiten Zuleitung (2) mit einem Temperierkanal (3) eines Formwerkzeugs (4), **dadurch gekennzeichnet, dass** ein erster Anschluss (6) für die erste Zuleitung (1), ein zweiter Anschluss (7) für die zweite Zuleitung (2) und ein Temperierkanalanschluss (8) für den Temperierkanal (3) vorgesehen sind, wobei der erste Anschluss (6) mit einem ersten Auslass (16) über eine äußere Verbindungsleitung (10) verbunden ist und der zweite Anschluss (7) mit einem zweiten Auslass (17) über eine innere Verbindungsleitung (18) verbunden ist und wobei die innere Verbindungsleitung (18) zumindest teilweise innerhalb der äußeren Verbindungsleitung (10) verläuft.

2. Adapter nach Anspruch 1, **dadurch gekennzeichnet, dass** der Adapter T-förmig ausgebildet ist.

3. Adapter nach Anspruch 1 oder 2, **dadurch gekennzeichnet, dass** eine der Verbindungsleitungen (10, 18), insbesondere die innere Verbindungsleitung (18), geradlinig verläuft.

4. Adapter nach einem der Ansprüche 1 bis 3, **dadurch gekennzeichnet, dass** die innere Verbindungsleitung (18) einen Innendurchmesser von höchstens 2 mm, bevorzugt höchstens 1 mm, besonders bevorzugt höchstens 0,5 mm aufweist.

5. Adapter nach einem der Ansprüche 1 bis 4, **dadurch gekennzeichnet, dass** die äußere Verbindungsleitung (10) einen Innendurchmesser von höchstens 10 mm, bevorzugt höchstens 6 mm, besonders bevorzugt höchstens 2 mm aufweist.

6. Adapter nach einem der Ansprüche 1 bis 5, **dadurch gekennzeichnet, dass** die innere und die äußere Verbindungsleitung (10, 18) zumindest teilweise koaxial zueinander verlaufen.

7. Adapter nach einem der Ansprüche 1 bis 6, **dadurch gekennzeichnet, dass** der erste Anschluss (6) mit einer Quelle für ein Heizmedium und der zweite Anschluss (7) mit einer Quelle für ein Kühlmedium verbunden sind.

8. Adapter nach einem der Ansprüche 1 bis 7, **dadurch gekennzeichnet, dass** sich der erste und der zweite Auslass (16, 17) in einer Ebene befinden.

9. Adapter nach einem der Ansprüche 1 bis 8, **dadurch gekennzeichnet, dass** der Temperierkanalanschluss (8) mit dem Formteil (4) verschraubbar ist.

10. Adapter nach einem der Ansprüche 1 bis 8, **dadurch gekennzeichnet, dass** die zweite Zuleitung (2) und die innere Verbindungsleitung (18) einstückig ausgebildet sind.

11. Formwerkzeug mit einem Adapter nach einem der Ansprüche 1 bis 10.

12. Verwendung eines Adapters nach einem der Ansprüche 1 bis 10 zum Verbinden einer ersten Zuleitung (1) und einer zweiten Zuleitung (2) mit einem Temperierkanal (3) eines Formwerkzeugs (4).
